# EUROPÄISCHE PATENTSCHRIFT

(11) **EP 0 792 708 B1**
(45) Veröffentlichungstag und Bekanntmachung des Hinweises auf die Patenterteilung: **07.07.1999**
(21) Anmeldenummer: 96117841.5
(22) Anmeldetag: 07.11.1996
(51) Int. Cl.: B23B 29/04, B23B 31/26

(54) **Werkzeugspanneinrichtung**
Tool clamping means
Dispositif d'abloquage d'outil

(30) Priorität: 28.02.1996 DE 29603602 U
(43) Veröffentlichungstag der Anmeldung: 03.09.1997
(73) Patentinhaber: Klement, Klaus-Dieter, 52428 Jülich (DE)
(72) Erfinder: Klement, Klaus-Dieter, 52428 Jülich (DE)
(74) Vertreter: Albrecht, Rainer Harald, Dr.-Ing.

(56) Entgegenhaltungen:
- EP-A- 0 507 147
- EP-A- 0 528 262
- US-A- 5 452 631

## Beschreibung

Die Erfindung betrifft eine Werkzeugspanneinrichtung mit
einem Spannschaft, der in Spannschaftlängsrichtung eine Kammer mit einer Schaftaufnahme für den Hohlschaft eines Werkzeuges oder Werkzeugträgers aufweist,
einem Zugbolzen, der in der Kammer schiebebeweglich geführt ist und einen in den Hohlschaft eingreifenden Kopf aufweist,
einem Sperrelement mit radial beweglichen Sperrsegmenten, die bei einer Spannbewegung des Zugbolzens an einer Kegelfläche des Kopfes nach außen gleiten und einen Spannkragen des Hohlschaftes hinterfassen, sowie
einer Stelleinrichtung für die Betätigung des Zugbolzens und zum Lösen des in die Schaftaufnahme eingepaßten Hohlschaftes,
wobei die Stelleinrichtung eine Exzenterwelle aufweist, die in einer Radialbohrung des Spannschaftes drehbar gelagert ist und eine in eine Querbohrung des Zugbolzens eingreifende Spannexzenterscheibe zum Spannen des Zugbolzens aufweist.

Eine Spanneinrichtung mit den beschriebenen Merkmalen ist aus EP-A-0 507 147 bekannt. Bei der bekannten Ausführung wird die Spannexzenterscheibe sowohl bei einer Drehbewegung in Spannrichtung als auch bei der entgegengesetzten Drehbewegung zum Lösen des in der Spannschaftaufnahme festgesetzten Hohlschaftes unmittelbar auf den Zugbolzen und bewirkt dessen Stellbewegung. Nachteilig ist, daß die Kinematik der Stellbewegung in beiden Richtungen gleich ist. Für die Spannbewegung sind die Anlageflächen zwischen der Spannexzenterscheibe und dem Zugbolzen so zu gestalten, daß bei der Spannbewegung eine große Spannkraft erzeugt wird. Beim Ausstoßen des Hohlschaftes aus der Schaftaufnahme sind hingegen nur verhältnismäßig geringe Kräfte zu überwinden. Im Hinblick auf den Lösevorgang ist eine Kinematik zweckmäßig, bei der einer kleiner Drehbewegung der Exzenterwelle ein großer Hub in Ausstoßrichtung zugeordnet ist. Die bekannte Werkzeugspanneinrichtung wird diesen unterschiedlichen Anforderungen beim Spannen und Lösen des Hohlschaftes nicht ausreichend gerecht.

Bei der aus EP-B-0 528 262 bekannten Werkzeugspanneinrichtung besteht die Stelleinrichtung aus einer Mehrzahl von Stiften, die in Radialbohrungen des Spannschaftes eingesetzt sind und an dem Zugelement angreifen. Die Verstellung der Stifte erfolgt mittels einer an der Außenseite des Spannschaftes angeordneten Überwurfmutter, die eine umlaufende Stützfläche für die Stifte aufweist. Die Stützfläche ist so ausgerichtet, daß sie beim Anziehen der Überwurfmutter in Spannrichtung die Stifte durch die Bohrungen in das Innere des Spannschaftes und gegen die Angriffsfläche am Zugelement drückt. Beim Lösen der Überwurfmutter erfaßt der zum Werkzeug hin vordere Rand der Überwurfmutter den Schaft des Werkzeuges oder Werkzeugträgers und löst diesen aus dem Schaftaufnahmeteil. Das Spannen und Lösen ist verhältnismäßig zeitaufwendig, da die Überwurfmutter jeweils mehrfach gedreht werden muß.

Der Erfindung liegt die Aufgabe zugrunde, eine Werkzeugspanneinrichtung anzugeben, die einen schnellen Werkzeugwechsel ermöglicht.

Die Aufgabe wird bei einer Werkzeugspanneinrichtung des eingangs beschriebenen Aufbau erfindungsgemäß dadurch gelöst, daß am Umfang des Zugbolzens eine Auswurfhülse angeordnet ist, die schiebebeweglich in der Kammer geführt ist und bei einer Stellbewegung entgegen der Spanneinrichtung das stirnseitige Ende des in die Schaftaufnahme eingesetzten Hohlschaftes erfaßt, und daß die Exzenterwelle zusätzlich zu der Spannexzenterscheibe mit der Auswurfhülse zusammenwirkende Löseexzenterscheiben zur Betätigung der Auswurfhülse aufweist. Durch eine Viertel- bis Halbkreisdrehung der Exzenterwelle ist der Zugbolzen spannbar. Durch eine Rückstellung um den gleichen Winkelbetrag kann der in der Schaftaufnahme festsitzende Hohlschaft wieder ausgestoßen werden.

Eine bevorzugte Ausführung der Erfindung ist dadurch gekennzeichnet, daß die Querbohrung des Zugbolzens als Langloch ausgebildet ist sowie eine in das Langloch vorkragende Spannfläche aufweist und daß die in die Querbohrung eingreifende Spannexzenterscheibe als ebene Kreissegmentscheibe mit einem zur Drehachse der Exzenterwelle exzentrisch versetzten Kreismittelpunkt und mit einer Planfläche ist, wobei die Planfläche an der Spannfläche der Querbohrung anliegt, wenn der Zugbolzen ungespannt ist, und wobei durch eine Drehbewegung der Exzenterwelle der kreisbogenförmige Spannabschnitt der Spannexzenterscheibe mit der Spannfläche der Querbohrung in Eingriff bringbar und der Zugbolzen dadurch spannbar ist. Durch Drehen der Exzenterwelle führt der Zugbolzen zunächst einen großen Hub in Spannrichtung (Schnellhub) aus. Der Bereich des Schnellhubs erstreckt sich vorzugsweise über einen Winkelbereich von etwa 60°. Sobald der kreisbogenförmige Spannabschnitt der Spannexzenterscheibe an der Spannfläche anliegt, kann durch Drehen der Exzenterwelle nur noch ein kleiner Spannweg zurückgelegt werden, der durch die Exzentrizität der Spannexzenterscheibe festgelegt ist, wobei große Spannkräfte aufgebracht werden können. Dieser sich an den ersten Winkelbereich (Schnellhub) anschließende Spannbereich erstreckt sich vorzugsweise über etwa 75 Winkelgrad.

Die mit der Auswurfhülse zusammenwirkenden Löseexzenterscheiben sind als Kreisscheiben mit einem zur Drehachse der Exzenterwelle exzentrisch versetzten Kreismittelpunkt ausgeführt, wobei der exzentrische Versatz der Löseexzenterscheiben in Auswurfrichtung maximal ist, wenn die Planfläche der Spannexzenterscheibe an der zugeordneten, vorkragenden Spannfläche der Querbohrung anliegt. Die Löseexzenterscheiben sind dann wirksam, wenn der Zugbolzen ungespannt ist. Die Exzenterwelle erfüllt damit eine doppelte Funktion. Sie betätigt, je nach Winkelstellung, den Zugbolzen in Spannrichtung und die Auswurfhülse in Auswurfrichtung.

In weiterer Ausgestaltung lehrt die Erfindung, daß auf dem Zugbolzen eine Schiebehülse axial beweglich angeordnet und mittels einer Druckfeder an der Auswurfhülse abgestützt ist, wobei die Schiebehülse und das Kopfteile des Zugbolzens einen Ringraum begrenzen, in dem die Sperrsegmente radial beweglich angeordnet sind. Der Zugbolzen weist vorzugsweise an seinen beiden Enden Zentrierungszapfen auf, die in Zentrierungszapfenaufnahmen des Hohlschaftes und des Spannschaftes gleitbeweglich eingreifen. Ferner ist die Auswurfhülse zweckmäßig an einer in die Kammer eingesetzten Feder abgestützt.

Die Exzenterwelle kann endseitige Spannschlüsselaufnahmen aufweisen. Im übrigen ist die Exzenterwelle zwischen Hülsen geführt, die in die Radialbohrungen eingesetzt sind.

Im folgenden wird die Erfindung anhand einer lediglich ein Ausführungsbeispiel darstellenden Zeichnung ausführlich erläutert. Es zeigen schematisch
- Fig. 1: einen Längsschnitt durch eine Werkzeugspanneinrichtung,
- Fig. 2: die Seitenansicht des Zugbolzens der in Fig. 1 dargestellten Werkzeugspanneinrichtung,

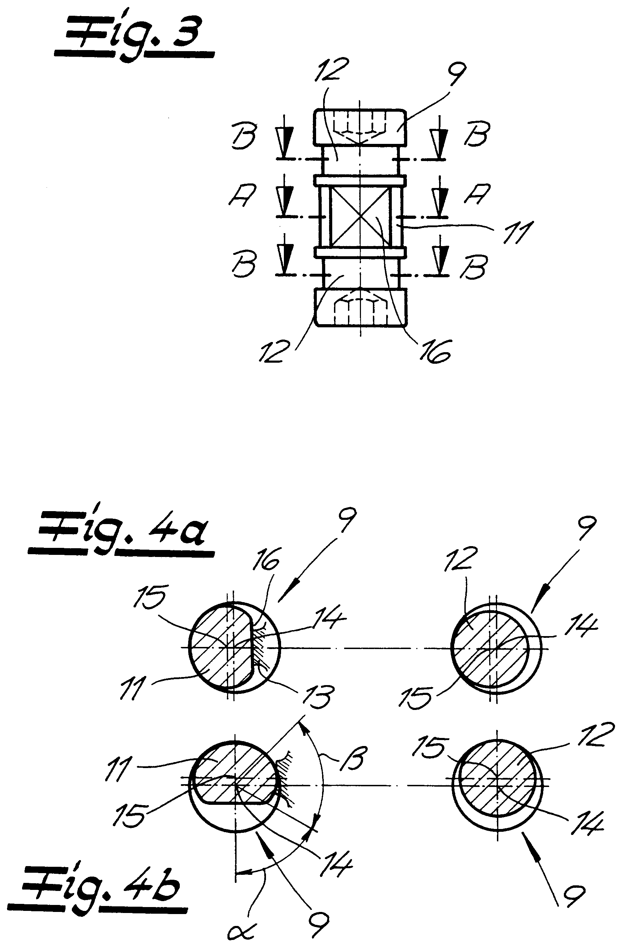

- Fig. 3: die Exzenterwelle der Werkzeugspanneinrichtung,
- Fig. 4a,4b: Schnitte A-A und B-B in Fig. 3 in verschiedenen Betriebsstellungen.

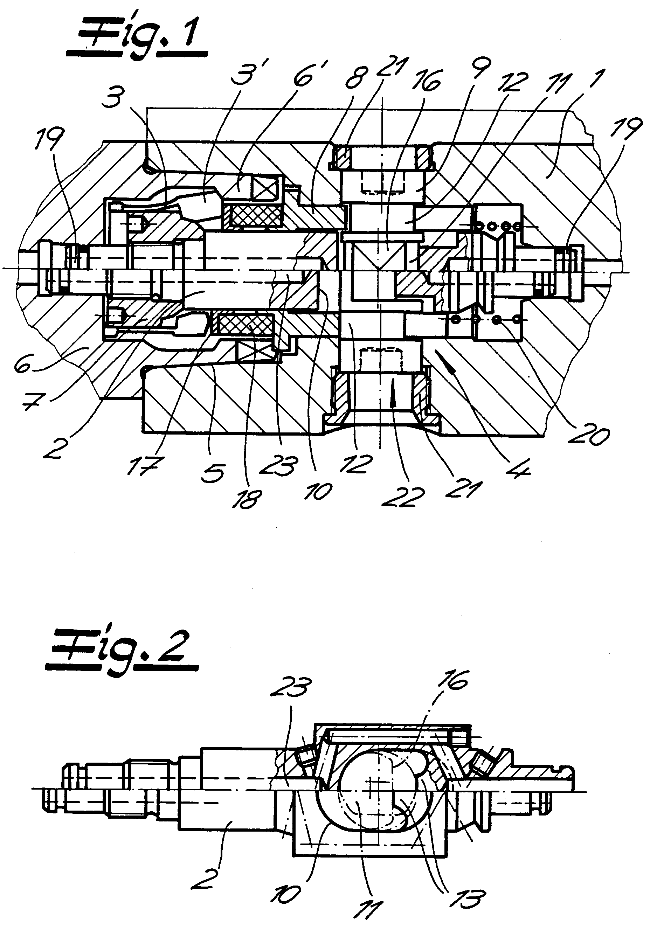

Die obere Hälfte der Figuren 1 und 2 zeigt die Werkzeugspanneinrichtung jeweils im gespannten, die untere Hälfte der Figuren die Spanneinrichtung im ungespannten Zustand.

Zum grundsätzlichen Aufbau der in Fig. 1 dargestellten Werkzeugspanneinrichtung gehören ein Spannschaft 1, ein Zugbolzen 2, ein Sperrelement 3 sowie eine Stelleinrichtung 4 für die Betätigung des Zugbolzens 2. Der Spannschaft 1 weist in Spannschaftlängsrichtung eine Kammer 5 mit einer Schaftaufnahme für den Hohlschaft 6 eines Werkzeuges oder Werkzeugträgers auf. Der Zugbolzen 2 ist in der Kammer 5 schiebebeweglich geführt und besitzt einen in den Hohlschaft 6 eingreifenden Kopf 7. Das Sperrelement 3 ist mit radial beweglichen Sperrsegmenten 3' ausgerüstet, die bei einer Spannbewegung des Zugbolzens 2 an einer Kegelfläche des Kopfes 7 nach außen gleiten und einen Spannkragen 6' des Kohlschaftes 6 hinterfassen.

Am Umfang des Zugbolzens 2 ist eine Auswurfhülse 8 angeordnet, die schiebebeweglich in der Kammer 5 geführt ist und bei einer Stellbewegung entgegen der Spannrichtung das stirnseitige Ende des in die Schaftaufnahme eingesetzten Hohlschaftes 6 erfaßt. Die Stelleinrichtung 4 weist eine Exzenterwelle 9 auf, die in einer Radialbohrung des Spannschaftes 1 drehbar gelagert ist. Sie besitzt eine in eine Querbohrung 10 des Zugbolzens 2 eingreifende Spannexzenterscheibe 11 zum Spannen des Zugbolzens 2 sowie mit der Auswurfhülse 8 zusammenwirkende Löseexzenterscheiben 12 zur Betätigung der Auswurfhülse 8.

Insbesondere der Fig. 2 entnimmt man, daß die Querbohrung 10 des Zugbolzens 2 als Langloch ausgebildet ist und eine in das Langloch vorkragende Spannfläche 13 aufweist. Die in die Querbohrung 10 eingreifende Spannexzenterscheibe, im folgenden kurz Spannexzenter genannt, ist eine ebene Kreissegmentscheibe mit einem zur Drehachse 14 der Exzenterwelle exzentrisch versetzten Kreismittelpunkt 15 und mit einer Planfläche 16. Die Planfläche 16 liegt an der Spannfläche 13 der Querbohrung 10 an, wenn der Zugbolzen 2 ungespannt ist. Einer vergleichenden Betrachtung der Figuren 4a und 4b entnimmt man, daß durch eine Drehbewegung der Exzenterwelle 9 der kreisbogenförmige Spannabschnitt des Spannexzenters 11 mit der Spannfläche 13 der Querbohrung 10 in Eingriff bringbar und der Zugbolzen 2 dadurch spannbar ist. In einem ersten Winkelbereich α, der sich im Ausführungsbeispiel über 60° erstreckt, führt der Zugbolzen 2 bei seiner Spannbewegung einen großen Hub aus. In einem sich daran anschließenden Winkelbereich β, der sich im Ausführungsbeispiel über weitere 75° erstreckt, erfolgt die Spannung des Zugbolzens 2 mit großer Spannkraft bei kleinem Spannweg. Der Spannweg des zweiten Bereiches ist durch den exzentrischen Versatz des Kreismittelpunktes 15 des Spannexzenters 11 von der Drehachse 14 der Exzenterwelle 9 festgelegt und beträgt im Ausführungsbeispiel 1,5 mm.

Die mit der Ausnehmung der Auswurfhülse zusammenwirkenden Löseexzenterscheiben 12, nachfolgend kurz Löseexzenter genannt, sind Kreisscheiben mit einem zur Drehachse 14 der Exzenterwelle ebenfalls exzentrisch versetzten Kreismittelpunkt 15. Einer vergleichenden Betrachtung der Figuren 4a und 4b entnimmt man, daß der exzentrische Versatz der Löseexzenter in Auswurfrichtung maximal ist, wenn die Planfläche 16 des Spannexzenters 11 an der zugeordneten, vorkragenden Spannfläche 13 der Querbohrung 10 anliegt und sich der Zugbolzen 2 in seinem ungespannten Zustand befindet. Nach einer Spannung des Zugbolzens 2 durch eine Viertel- bis Halbkreisdrehung der Exzenterwellen 9 befinden sich die Löseexzenter in einer nichtaktiven Position (Fig. 4b).

Der Fig. 1 entnimmt man, daß auf dem Zugbolzen 2 eine Schiebehülse 17 axial beweglich angeordnet ist und mittels einer Druckfeder 18 an der Auswurfhülse 8 abgestützt ist. Die Schiebehülse 17 und das Kopfteil 7 des Zugbolzens 2 begrenzen einen Ringraum, in dem die Sperrsegmente 3' radial beweglich angeordnet sind. Der Zugbolzen 2 weist an seinen beiden Enden Zentrierungszapfen 19 auf, die in Zentrierungszapfenaufnahmen des Hohlschaftes 6 und des Spannschaftes 1 gleitbeweglich eingreifen. Schließlich entnimmt man der Fig. 1, daß die Auswurfhülse 8 an einer in die Kammer 5 eingesetzten Feder 20 abgestützt ist. Die Exzenterwelle 9 ist drehbar in der Radialbohrung des Spannschaftes 1 gelagert und zwischen Hülsen 21 geführt, die in die Radialbohrung eingesetzt sind. Durch endseitige Spannschlüsselaufnahmen 22 ist die Exzenterwelle 9 drehbar.

Der Zugbolzen 2 ist mit einem mittigen Flüssigkeitskanal 23 versehen, der um die Querbohrung 10 herumgeführt ist (Fig. 2).

## Patentansprüche

1. Werkzeugspanneinrichtung mit
einem Spannschaft (1), der in Spannschaftlängsrichtung eine Kammer (5) mit einer Schaftaufnahme für den Hohlschaft (6) eines Werkzeuges oder Werkzeugträgers aufweist,
einem Zugbolzen (2), der in der Kammer (5) schiebebeweglich geführt ist und einen in den Hohlschaft (6) eingreifenden Kopf (7) aufweist,
einem Sperrelement (3) mit radial beweglichen Sperrsegmenten (3'), die bei einer Spannbewegung des Zugbolzens (2) an einer Kegelfläche des Kopfes (7) nach außen gleiten und einen Spannkragen (6') des Hohlschaftes (6) hinterfassen, sowie
einer Stelleinrichtung (4) für die Betätigung des Zugbolzens (2) und zum Lösen des in die Schaftaufnahme eingepaßten Hohlschaftes (6),
wobei die Stelleinrichtung (4) eine Exzenterwelle (9) aufweist, die in einer Radialbohrung des Spannschaftes (1) drehbar gelagert ist und eine in eine Querbohrung (10) des Zugbolzens (2) eingreifende Spannexzenterscheibe (11) zum Spannen des Zugbolzens (2) aufweist, **dadurch gekennzeichnet**, daß am Umfang des Zugbolzens (2) eine Auswurfhülse (8) angeordnet ist, die schiebebeweglich in der Kammer (5) geführt ist und bei einer Stellbewegung entgegen der Spanneinrichtung das stirnseitige Ende des in die Schaftaufnahme eingesetzten Hohlschaftes (6) erfaßt, und daß die Exzenterwelle (9) zusätzlich zu der Spannexzenterscheibe (11) mit der Auswurfhülse (8) zusammenwirkende Löseexzenterscheiben (12) zur Betätigung der Auswurfhülse (8) aufweist.

2. Werkzeugspanneinrichtung nach Anspruch 1, dadurch gekennzeichnet, daß die Querbohrung (10) des Zugbolzens (2) als Langloch ausgebildet ist sowie eine in das Langloch vorkragende Spannfläche (13) aufweist und daß die in die Querbohrung (10) eingreifende Spannexzenterscheibe (11) als ebene Kreissegmentscheibe mit einem zur Drehachse (14) der Exzenterwelle (9) exzentrisch versetzten Kreismittelpunkt (15) und mit einer Planfläche (16) ausgeführt ist, wobei die Planfläche (16) an der Spannfläche (13) der Querbohrung (10) anliegt, wenn der Zugbolzen (2) ungespannt ist, und wobei durch eine Drehbewegung der Exzenterwelle (9) der kreisbogenförmige Spannabschnitt der Spannexzenterscheibe (11) mit der Spannfläche (13) der Querbohrung (10) in Eingriff bringbar und der Zugbolzen (2) dadurch spannbar ist.

3. Werkzeugspanneinrichtung nach Anspruch 1 oder 2, dadurch gekennzeichnet, daß die mit der der Auswurfhülse (8) zusammenwirkenden Löseexzenterscheiben (12) als Kreisscheiben mit einem zur Drehachse (14) der Exzenterwelle (9) exzentrisch versetzten Kreismittelpunkt (15) ausgeführt sind, wobei der exzentrische Versatz der Löseexzenterscheiben (12) in Auswurfrichtung maximal ist, wenn die Planfläche (16) der Spannexzenterscheibe (11) an der zugeordneten Spannfläche (13) anliegt.

4. Werkzeugspanneinrichtung nach einem der der Ansprüche 1 bis 3, dadurch gekennzeichnet, daß auf dem Zugbolzen (2) eine Schiebehülse (17) axial beweglich angeordnet und mittels einer Druckfeder (18) an der Auswurfhülse (18) abgestützt ist, wobei die Schiebehülse (17) und das Kopfteil (7) des Zugbolzens (2) einen Ringraum begrenzen, in dem die Sperrsegmente (3') radial beweglich angeordnet sind.

5. Werkzeugspanneinrichtung nach einem der Ansprüche 1 bis 4, dadurch gekennzeichnet, daß der Zugbolzen (7) an seinen beiden Enden Zentrierungszapfen (19) aufweist, die in Zentrierungszapfenaufnahmen des Hohlschaftes (6) und des Spannschaftes (1) gleitbeweglich eingreifen.

6. Werkzeugspanneinrichtung nach einem der Ansprüche 1 bis 5, dadurch gekennzeichnet, daß die Auswurfhülse (8) an einer in die Kammer (5) eingesetzten Feder (20) abgestützt ist.

7. Werkzeugspanneinrichtung nach einem der Ansprüche 1 bis 6, dadurch gekennzeichnet, daß die Exzenterwelle (9) zwischen Hülsen (21) geführt ist, die in die Radialbohrung eingesetzt sind.

8. Werkzeugspanneinrichtung nach einem der Ansprüche 1 bis 7, dadurch gekennzeichnet, daß die Exzenterwelle (9) endseitige Spannschlüsselaufnahmen (22) aufweist.

## Claims

1. A tool chucking device comprising
a chucking shank (1), which in the longitudinal direction of the chucking shank has a chamber (5) having a shank receiver for the hollow shank (6) of a tool or toolholder,
a holding bolt (2), which is guided so that it can slide longitudinally in the chamber (5) and which has a head (7) which fits into the hollow shank (6),
a locking element (3) with radially movable locking segments (3'), which on a chucking movement of the holding bolt (2) slide outwards on a tapered face of the head (7) and engage behind a chucking collar (6') of the hollow shank (6), and comprising
an adjusting device (4) for operating the holding bolt (2) and for loosening the hollow shank (6) which is fitted into the shank receiver,
wherein the adjusting device comprises an eccentric shaft (9) which is rotatably mounted in a radial bore of the chucking shank (1) and which has an eccentric clamping disc (11), which fits into a transverse bore (10) of the holding bolt (2), for clamping the holding bolt (2), characterised in that an ejection sleeve (8), which is guided so that it can slide in the chamber (5), is disposed at the periphery of the holding bolt (2) and grasps the end face of the hollow shank (6) inserted in the shank receiver when there is an adjusting movement in the opposite direction to the direction of chucking, and that in addition to the eccentric clamping disc (11) the eccentric shaft (9) has eccentric release discs (12), which cooperate with the ejection sleeve (8), for operating the ejection sleeve (8).

2. A tool chucking device according to claim 1, characterised in that the transverse bore (10) of the holding bolt (2) is formed as an elongated hole and has a clamping face (13) which protrudes into the elongated hole, and that the eccentric clamping disc (11) which fits into the transverse bore (10) is constructed as a flat circular segment disc with a flat face (16) and with a circle centre (15) which is offset eccentrically in relation to the axis of rotation (14) of the eccentric shaft (9), wherein the flat face (16) is seated against the clamping face (13) of the transverse bore (10) when the holding bolt (2) is not clamped, and wherein the circularly arcuate clamping section of the eccentric clamping disc (11) can be brought into engagement with the clamping face (13) of the transverse bore (10), and the holding bolt (2) can thereby be clamped, by a rotary movement of the eccentric shaft (9).

3. A tool chucking device according to claim 1 or 2, characterised in that the eccentric release discs (12) which cooperate with the ejection sleeve (8) are constructed as circular discs with a circle centre (15) which is offset eccentrically in relation to the axis of rotation (14) of the eccentric shaft (9), wherein the eccentric offset of the eccentric release discs (12) in the direction of ejection is a maximum when the flat face (16) of the eccentric clamping disc (11) is seated against the associated clamping face (13).

4. A tool chucking device according to any one of claims 1 to 3, characterised in that a sliding sleeve (17) is axially movably disposed on the holding bolt (2) and is supported on the ejection sleeve (18) by means of a pressure spring (18), wherein the sliding sleeve (17) and the head part (7) of the holding bolt (2) delimit an annular space in which the locking segments (3') are radially movably disposed.

5. A tool chucking device according to any one of claims 1 to 4, characterised in that the holding bolt (7) has centring pins (19) at both its ends, which centring pins fit, so that they can move by sliding, into centring pin recesses in the hollow shank (6) and in the chucking shank (1).

6. A tool chucking device according to any one of claims 1 to 5 characterised in that the ejection sleeve (8) is supported on a spring (20) inserted in the chamber (5).

7. A tool chucking device according to any one of claims 1 to 6, characterised in that the eccentric shaft (9) is guided between bushings (21) which are inserted in the radial bore.

8. A tool chucking device according to any one of claims 1 to 7, characterised in that the eccentric shaft (9) has chuck key receivers (22) at its end faces.

## Revendications

1. Dispositif de serrage d'outil comprenant
une tige de serrage (1) comportant, dans sa direction longitudinale, une chambre (5) pourvue d'un logement de tige pour la tige creuse (6) d'un outil ou d'un porte-outil,
un boulon tirant (2) qui est guidé de manière coulissante dans la chambre (5) et comporte une tête (7) engagée dans la tige creuse (6),
un élément d'arrêt (3) à segments d'arrêt mobiles radialement (3') qui, lors d'un mouvement de serrage du boulon tirant (2), glissent vers l'extérieur contre une surface conique de la tête (7) et s'engagent derrière un collet de serrage (6') de la tige creuse (6), ainsi que
un dispositif de réglage (4) pour actionner le boulon tirant (2) et pour libérer la tige creuse (6) insérée dans le logement de tige,
le dispositif de réglage (4) comportant un arbre à excentrique (9) qui est logé en rotation dans un trou radial de la tige de serrage (1) et qui, pour serrer le boulon tirant (2), comporte un disque excentrique de serrage (11) engagé dans un trou transversal (10) du boulon tirant (2), caractérisé en ce que sur le pourtour du boulon tirant (2) est disposé un fourreau d'éjection (8) qui est guidé coulissant dans la chambre (5) et qui, lors d'un mouvement de réglage l'éloignant du dispositif de serrage, intercepte l'extrémité frontale de la tige creuse (6) insérée dans le logement de tige, et en ce qu'en plus du disque excentrique de serrage (11) l'arbre à excentrique (9) comporte des disques excentriques de libération (12) qui coopèrent avec le fourreau d'éjection (8) et qui sont aptes à actionner le fourreau d'éjection (8).

2. Dispositif de serrage d'outil selon la revendication 1, caractérisé en ce que le trou transversal (10) du boulon tirant (2) est conçu sous la forme d'un trou oblong et comporte une surface de serrage (13) qui fait saillie dans le trou oblong, et en ce que le disque excentrique de serrage (11) engagé dans le trou transversal (10) est conçu sous la forme d'un disque plat à segment circulaire muni d'un centre de cercle (15) excentré par rapport à l'axe de rotation (14) de l'arbre à excentrique (9) et d'un méplat (16), le méplat (16) étant appliqué contre la surface de serrage (13) du trou transversal (10) lorsque le boulon tirant (2) n'est pas serré, la portion de serrage en arc de cercle du disque excentrique de serrage (11) pouvant être mise en prise avec la surface de serrage (13) du trou transversal (10) par un mouvement de rotation de l'arbre à excentrique (9) et le boulon tirant (2) pouvant être ainsi serré.

3. Dispositif de serrage d'outil selon la revendication 1 ou 2, caractérisé en ce que les disques excentriques de libération (12) coopérant avec le fourreau d'éjection (8) sont conçus sous la forme de disques circulaires avec un centre de cercle (15) excentré par rapport à l'axe de rotation (14) de l'arbre à excentrique (9), l'excentration des disques excentriques de libération (12) dans le sens de projection étant maximale lorsque le méplat (16) du disque excentrique de serrage (11) est appliqué contre la surface de serrage associée (13).

4. Dispositif de serrage d'outil selon l'une des revendications 1 à 3, caractérisé en ce qu'un fourreau coulissant (17) est disposé sur le boulon tirant (2) avec une possibilité de déplacement axial et prend appui sur le fourreau d'éjection (18) au moyen d'un ressort de compression (18), le fourreau coulissant (17) et la partie de tête (7) du boulon tirant (2) délimitant un espace annulaire dans lequel les segments d'arrêt (3') sont disposés avec une possibilité de déplacement radial.

5. Dispositif de serrage d'outil selon l'une des revendications 1 à 4, caractérisé en ce que le boulon tirant (7) comporte à ses deux extrémités des tétons de centrage (19) qui s'insèrent par mouvement glissant dans des logements de tétons de centrage de la tige creuse (6) et de la tige de serrage (1).

6. Dispositif de serrage d'outil selon l'une des revendications 1 à 5, caractérisé en ce que le fourreau d'éjection (8) prend appui sur un ressort (20) inséré dans la chambre (5).

7. Dispositif de serrage d'outil selon l'une des revendications 1 à 6, caractérisé en ce que l'arbre à excentrique (9) est guidé entre des fourreaux (21) qui sont insérés dans le trou radial.

8. Dispositif de serrage d'outil selon l'une des revendications 1 à 7, caractérisé en ce que l'arbre à excentrique (9) comporte à ses extrémités des logements pour clé de serrage (22).
